# EUROPEAN PATENT SPECIFICATION

(11) **EP 3 515 211 B1**
(45) Date of publication and mention of the grant of the patent: **01.01.2020**
(21) Application number: 17762083.8
(22) Date of filing: 30.08.2017
(51) Int. Cl.: A23L 25/00, A23G 3/42, A23L 33/125

(54) **COCONUT SUGAR ALTERNATIVE**
KOKOSNUSSZUCKERALTERNATIVE
SUCRE DE NOIX DE COCO DE SUBSTITUTION

(30) Priority: 19.09.2016 EP 16189457
(43) Date of publication of application: 31.07.2019
(73) Proprietor: Unilever N.V., 3013 AL Rotterdam (NL); Unilever PLC, London, Greater London EC4Y 0DY (GB)
(72) Inventor: ASTUTI, Indri, Kawasan Cikarang-Bekasi (ID); BASCH, Nicolas, Henri, R,, 74074 Heilbronn (DE); CHAARA, Mohamed, Said, 3133 AT Vlaardingen (NL); DESCLAUX, Guillaume, 3133 AT Vlaardingen (NL); WEIMAR, Regine, 74074 Heilbronn (DE)
(74) Representative: van den Brom, Coenraad Richard
(86) International application number: PCT/EP2017/071717
(87) International publication number: WO 2018/050434

(56) References cited:
- CN-B- 103 156 046
- US-A- 3 846 562
- US-A- 3 860 731
- US-A- 3 899 606
- US-A- 3 924 016
- US-A- 4 423 085

## Description

### FIELD OF THE INVENTION

The present invention is in the field of sugar compositions. More particularly, the invention relates to a sugar composition that can be used as an alternative for coconut sugar.

The invention further relates to a method of preparing the aforementioned coconut sugar alternative and to the use of this composition as an aromatic sweetener in foodstuffs and beverages, such as soy sauce.

### BACKGROUND OF THE INVENTION

Coconut sugar is a sugar produced from the sap of cut flower buds of the coconut palm. Coconut sugar has been used as a traditional sweetener for thousands of years in the South and South-East Asian regions.

Coconut sugar is produced by local farmers, mainly in the Philippines and Indonesia. The process of making coconut sugar starts with collecting coconut sap from the blossoms of a coconut tree. Farmers make a cut on the spadix of the blossom and the sap starts to flow from the cut. The sap is then collected in containers. The collected sap is then transferred into large woks and exposed to moderate heat to evaporate the moisture content of the sap. The sap is translucent and contains about 80% water. As the water evaporates from the sap, it starts to transform into a thick syrup-like substance. From this form, it is further reduced to crystal, a block or soft paste form, or it remains as a syrup-like form.

Coconut sugar is subtly sweet, almost like brown cane sugar, but with a slight hint of caramel. However, since coconut sugar is processed by local farmers, the color, sweetness and flavor can vary depending on the coconut species used, season when it was harvested, where it was harvested and/or the way the sap was processed by the local farmer.

In some areas, predominantly in Thailand, the terms "coconut sugar" and "palm sugar" are often used interchangeably. However, coconut sugar is different both in taste, texture and manufacture methods from palm sugar, which is made from the sap in the stems of palms trees, such as the *Palmyra* palm, date palm, sugar date palm, sago palm or the sugar palm.

The current supply of high grade coconut sugar has reached its limits. The demand for coconut sugar is outgrowing by far the available combined supplies of both high grades and low grades of coconut sugar. In addition, the supply of coconut sugar is very variable, in the rain season and during the Ramadan the supply of coconut sugar is significantly reduced and in some seasons other crops are more interesting for the farmers than the coconut sugar production.

Due to world market shortage of coconut sugar, there is a need for an alternative sugar product that can at least partially replace coconut sugar.

CN103156046 relates to a food processing field and relates to a confectionary and its production method, and more particularly to a coconut meat sugar produced by direct processing of fresh coconut meat and a method for producing the same. Example 3 discloses a coconut syrup mixture of coconut pulp 50 kg, glucose syrup 26.4 kg, white sugar 23 kg, monoglyceride 0.35kg, lecithin 0.15 kg, salt 0.1 kg which is then boiled. When the syrup temperature reaches 145-155 °C, the water content is less than 4%, the candy is cooled and cut using a rolling bar to obtain sugar particles.

An alternative for coconut sugar should not only be able to provide the sweetness of coconut sugar, but is should also have an aroma profile similar to the typical aroma profile of coconut sugar. Naturally, an alternative for coconut sugar should preferably be based on materials that are widely available on the world market. Furthermore it is preferred that the ingredients used in such an alternative product are natural ingredients.

### SUMMARY OF THE INVENTION

The present inventors have developed an alternative for coconut sugar that can be prepared in constant quality from widely available ingredients and that resembles the sweetness and typical aroma of coconut sugar.

The coconut sugar alternative of the present invention is prepared by a process comprising the steps:
- preparing a syrup mixture by combining:
   - 100 parts by weight of sugar component, including 10-100 parts by weight of sugar selected from cane sugar, beet sugar, palm sugar and combinations thereof and 0-90 parts by weight of coconut sugar;
   - 0.2-50 parts by weight of coconut material selected from coconut cream, coconut milk, coconut water, coconut meat and combinations thereof;
   - 0-100 parts by weight of water; and
   - 0-50 parts by weight of other edible ingredients;
- heating the syrup mixture for at least 5 minutes at a temperature of at least 110°C to obtain a heated sugar composition.

Although the inventors do not wish to be bound by theory, it is believed that during the heating of the syrup mixture aroma components are formed that are similar to the aroma components that give coconut sugar its typical aroma. Examples of these aroma compounds include Maillard components that are formed, for instance, by reactions between reducing sugars and amino acids. Also the contribution of lactones contained in the coconut material is believed to be important.

The invention also relates to a coconut sugar alternative that can be obtained by the above mentioned process and to the use of this composition as a sweetener in foodstuffs, especially in soy sauce.

### DETAILED DESCRIPTION OF THE INVENTION

A first aspect of the invention relates to a process for preparing a coconut sugar alternative, said process comprising the steps:
a. preparing a syrup mixture by combining:
   i. 100 parts by weight of sugar component, including 10-100 parts by weight of sugar selected from cane sugar, beet sugar, palm sugar and combinations thereof and 0-90 parts by weight of coconut sugar;
   ii. 0.2-50 parts by weight of coconut material selected from coconut cream, coconut milk, coconut water, coconut meat and combinations thereof;
   iii. 0-100 parts by weight of water; and
   iv. 0-50 parts by weight of other edible ingredients
b. heating the syrup mixture for at least 5 minutes at a temperature of at least 110°C to obtain a heated sugar composition.

The term "coconut sugar" as used herein refers to sugar produced from the sap of cut flower buds of the coconut palm.

The term "coconut water" as used herein refers to the liquid inside coconuts.

The term "coconut meat" as used herein refers to the endosperm deposit on the inside walls of the coconut, also referred to as "coconut flesh". The term "coconut meat also includes dried coconut meat, such as "copra".

The term "coconut milk" as used herein refers to the liquid that is produced from grated coconut meat by mixing the grated meat with aqueous liquid and filtering the mixture. Typically, the mixture of grated meat and aqueous liquid is simmered until frothy, before it is filtered.

The term "coconut cream" as used herein refers to the thick non-liquid part of coconut milk that is separates and rises to the top of the coconut milk when it is allowed to set at reduced temperature, e.g. when it is refrigerated. The term "coconut cream" also encompasses the use of dehydrated coconut cream.

The water content of the syrup mixture preferably lies in the range of 1-50 wt.%, more preferably in the range of 2-30 wt.% and most preferably of 5-20 wt.%.

During the heating of the syrup mixture the water content of the mixture may be reduced as a result of evaporation. Preferably, during the heating of the syrup mixture the water content of the mixture is reduced to less than 5 wt.%, more preferably to less than 2 wt.%.

The combination of sugar and coconut sugar typically represents at least 50 wt.%, more preferably at least 70 wt.% and most preferably at least 90 wt.% of the sugar component.

The sugar component typically contains at least 80 wt.% wt.% of saccharides selected from monosaccharides, disaccharides and combinations thereof. More preferably, the sugar component contains at least 80 wt.% of saccharides selected from sucrose, glucose, fructose and combinations thereof.

The sugar component preferably contains at least 80 wt.% of sucrose. More preferably, the sugar component contains 90 wt.% of sucrose.

In one embodiment of the present invention, the process is used to prepare a coconut sugar alternative with a unique, pleasant aroma that is similar to that of coconut sugar. In this embodiment, the sugar component contains not more than a minor amount of coconut sugar and largely consists of cane sugar, beet sugar and/or palms sugar. More particularly, the sugar component contains 0-30 wt.% coconut sugar and 70-100 wt.% of sugar selected from cane sugar, beet sugar, palm sugar and combinations thereof. Even more preferably, the sugar component contains 5-25 wt.% coconut sugar and 75-95 wt.% of sugar selected from cane sugar, beet sugar, palm sugar and combinations thereof.

In another embodiment of the present process, the process is used to prepare a coconut sugar alternative that closely resembles coconut sugar. In this embodiment, the sugar component contains 30-90 wt.% coconut sugar and 10-70 wt.% of sugar selected from cane sugar, beet sugar, palm sugar and combinations thereof. Even more preferably, the sugar component contains 50-80 wt.% coconut sugar and 20-50 wt.% of sugar selected from cane sugar, beet sugar, palm sugar and combinations thereof. Most preferably, the sugar component contains 60-70% wt.% coconut sugar and 30-40. wt.% of sugar selected from cane sugar, beet sugar, palm sugar and combinations thereof.The sugar in the sugar component preferably contains at least 50 wt.%, more preferably at least 80 wt.% and most preferably at least 90 wt.% of sugar selected from cane sugar, preferably refined cane sugar.

The preparation of the syrup preferably comprises mixing 100 parts by weight of the sugar component with 0.5-40 parts by weight, more preferably 2-30 parts by weight and most preferably 4-20 parts by weight of the coconut material.

Water is preferably employed in the preparation of the syrup mixture in an amount of 0-50 parts by weight, more preferably 0-40 parts by weight and most preferably of 5-30 parts by weight.

The coconut material employed in the present process is preferably selected from coconut milk, coconut cream, coconut meat and combinations thereof. Even more preferably, the coconut material is selected from coconut milk, coconut cream and combinations thereof. Most preferably, the coconut material is coconut cream.

The water content of the coconut material typically is in the range of 20-80 wt.%, more preferably in the range of 40-70 wt.%.

The coconut material typically comprises by weight of dry matter:
- 2-20 wt.% protein;
- 2-20 wt.% sugar component;
- 50-96 wt.% fat.

The protein content of the coconut material preferably is in the range of 3-15% by weight of dry matter, more preferably in the range of 4-10% by weight of dry matter.

The coconut material preferably contains 3-18% by weight of dry matter of sugars, more preferably 5-15% by weight of dry matter of sugars.

The fat content of the coconut material preferably is in the range of 70-95% by weight of dry matter, more preferably in the range of 80-94% by weight of dry matter.

Fat and protein are typically contained in the coconut material in a weight ratio that is in the range of 20:1 to 5:1.

The preparation of the syrup mixture may comprise the addition of water. Preferably, the preparation of the syrup mixture comprises admixing of 3-30 parts, more preferably 4-20 parts by weight of water.

The preparation of the syrup mixture optionally comprises addition of up to 50 parts by weight, preferably up to 30 parts by weight and most preferably of 0-15 parts by weight of other edible ingredients, i.e. components other than sugar component, coconut material and water. Examples of such other ingredients include, for instance, protein hydrolysate, amino acids, proteins, reducing sugars, phosphate and combinations thereof.

In the present process the syrup mixture is preferably heated at a temperature of 115-185°C, more preferably a temperature of 150-180°C for at least 5 minutes.

The heating of the syrup mixture can suitably be done at atmospheric pressure, sub-atmospheric pressure or increased pressure.

In one embodiment of the invention the syrup mixture is heated at atmospheric pressure or reduced pressure and water is allowed to evaporate during the heating, and the heated sugar composition that is obtained after the heating contains less than 5 wt.% water. Starting from the syrup mixture described above, at atmospheric or sub-atmospheric pressure, water evaporation may be necessary in order to realize the heating conditions specified above.

In another embodiment of the invention the syrup mixture is heated at a pressure of at least 1.5 bar, more preferably of at least 2 bar and most preferably of 2.5-3.2 bar. Heating under pressurized conditions makes it possible to realize the heating conditions specified above even when the syrup mixture contains a substantial amount of water. Consequently, this embodiment enables the preparation of a heated sugar composition in the form of a paste or a viscous liquid.

In an advantageous embodiment of the invention the heated sugar composition has a water content of less than 5 wt.% and this composition is cooled to a temperature of less than 40°C, followed by milling or grinding to produce a particulate composition having a mass weighted average particles size in the range of 10-1000 µm, preferably in the range of 50-800 µm. The particulate composition so obtained is easy to dose and can be used in the same way as ordinary refined sugar.

According to another advantageous embodiment, the heated sugar composition is diluted with an aqueous composition to produce a pourable composition having a concentration of 50-85 °Brix, more preferably of 75-85 °Brix. This pourable composition is also easy to dose and does not produce sugar dust (airborne sugar particles).

Another aspect of the invention relates to a coconut sugar alternative obtainable by the process as described herein. More preferably, the invention relates to a coconut sugar alternative that is obtained by the process of the present invention.

As explained above, the coconut sugar alternative of the present invention can be obtained in different forms. Preferably, the coconut sugar alternative is a solid shaped article, a powder or a pourable liquid. The coconut sugar alternative in the form of a solid shaped article or a powder typically has a water content of less than 5 wt.%. The pourable liquid typically has a water content of 15-50 wt.%.

Yet another aspect of the present invention relates to a process of preparing a sweetened foodstuff or a sweetened beverage, said process comprising incorporating 1-90 wt.% of the coconut sugar alternative of the present invention. More preferably, the process comprises incorporating 3-60 wt.% and most preferably incorporating 5-50 wt.% of the coconut sugar alternative.

Examples of foodstuffs in which the coconut sugar alternative may suitable be incorporated include soy sauce, cakes, desserts and ice cream. According to a particularly preferred embodiment, the coconut sugar alternative is incorporated in soy sauce, especially fermented soy sauce.

The application of the coconut sugar alternative in fermented soy sauce typically comprises combining 100 parts by weight of fermented soy sauce with 12-900 parts by weight of the coconut sugar alternative to produce a sweet soy sauce.

In case the coconut sugar alternative has been produced from a syrup mixture that contains little or no coconut sugar, it can be advantageous to combine the fermented soy sauce with both the coconut sugar alternative and coconut sugar. Accordingly, in a preferred embodiment, 100 parts by weight of fermented soy sauce is combined with 12-200 parts by weight of the coconut sugar alternative and 300-890 parts by weight of coconut sugar.

In case the coconut sugar alternative has been produced from a syrup mixture that contains more than 30 wt.% of coconut sugar, it is preferred to combine 100 parts by weight of fermented soy sauce with 200-900 parts by weight of the coconut sugar alternative.

The preparation of a sweet soy sauce as described above, preferably comprises the additional step of heating the combination comprising the fermented soy sauce and the coconut sugar alternative to a temperature of 90-130°C for at least 1 hour.

Finally, a further aspect of the present invention relates to a sweetened foodstuff or a sweetened beverage that is obtainable by the process of the present invention. More preferably, the sweetened foodstuff or the sweetened beverage is obtained by the present process.

According to a particularly preferred embodiment, the sweetened foodstuff is a sweet soy sauce that is obtainable by the process described above, more particularly to a sweet soy sauce that is obtained by such process.

The invention is further illustrated by the following non-limiting examples.

### EXAMPLES

### Example 1

A coconut sugar alternative was prepared starting from the recipe that is shown in Table 1.

**Table 1**

| | **Wt.%** |
|---|---|
| Refined cane sugar | 82.6 |
| Coconut cream concentrate ¹ | 6.2 |
| Water | 11.2 |

| | |
|---|---|
| ¹ ex Thai Coconut Public Company Ltd. (28-30% fat, 60-65% water) | |

The coconut sugar alternative was prepared by introducing the ingredients into an open pan and by cooking the contents of the pan on an induction heating plate under continuous stirring. During the cooking the temperature of the mixture was monitored. At a temperature of 130°C browning of the mixture started to occur. Cooking was continued until the mixture reached a temperature of 178°C (total cooking time: 25 minutes.

The temperature of the mixture as a function of time is shown in Table 2.

**Table 2**

| **Minutes** | **Temperature (in °C)** |
|---|---|
| 5 | 115 |
| 10 | 121 |
| 15 | 123 |
| 20 | 165 |
| 25 | 178 |

The heated sugar composition was quickly taken out of the pan and spread on aluminium foil. The composition was broken into pieces and milled into a powder using a Vorwerk Thermomix® (from NV Cnudde).

### Example 2

The coconut sugar alternative of Example 1 was used to partially replace coconut sugar in the recipe of sweet soy sauce. To this end sweet soy sauces were prepared on the basis of the recipes shown in Table 3.

**Table 3**

| | **Wt.%** | | | |
|---|---|---|---|---|
| | **Reference** | **1** | **2** | **3** |
| Fermented soy sauce | 17 | 17 | 17 | 17 |
| Coconut sugar | 76 | 53.2 | 45.6 | 38 |
| Coconut sugar alternative | | 22.8 | 30.4 | 38 |
| Water | 7 | 7 | 7 | 7 |

The sweet soy sauces were prepared by first introducing the sugar component and the water into a steam heated vessel followed by heating for 2 hours until the mixture had reached 75° Brix. Next the fermented soy sauce was added and the mixture was kept boiling until it reached 75° Brix. The hot mixture was filtered and cooled, followed by maturation at 60°C for 3 days. After maturation, the sediment and cream layer were removed.

The sweet soy sauces were evaluated by an expert panel. It was found that appearance, taste and texture of products 1, 2 and 3 were very similar to that of the Reference product. Product 1 was found to be indistinguishable from the reference product. Products 2 and 3 were found to be slightly different from the reference product,

### Example 3

Example 1 was repeated except that this time the coconut sugar alternative was prepared starting from the recipe that is shown in Table 4.

**Table 4**

| | **Wt.%** |
|---|---|
| Refined cane sugar | 80.6 |
| Coconut cream concentrate ¹ | 12.1 |
| Water | 7.3 |

Again, the sweet soy sauces were evaluated by an expert panel. It was found that appearance, taste and texture of products 1, 2 and 3 were very similar to that of the Reference product.

### Example 4

A liquid coconut sugar alternative is produced on the basis of the recipe shown in Table 1 of Example 1. This time, the ingredients of the coconut sugar alternative are heated in a SELO autoclave vessel.

The heating conditions in the autoclave were as follows:
- Heating jacket steam pressure: 6.5 Bar(a)
- Product temperature set point: 150°C
- Cooking vessel overpressure: 2.8 Bar(a)
- Mixing speed: 20% (7 rpm)

The mixture 100 kilograms is heated until the temperature of 150 °C is reached and is kept at this temperature for 10 minutes. Next, pressure is released and the product is taken out of the autoclave.

The product is diluted with water (when the product is still hot) to 80° Brix to obtain a liquid format.

The liquid coconut sugar alternative so obtained can be used as a replacer of or an alternative for coconut sugar.

### Example 5

A coconut sugar alternative was prepared starting from the recipe shown in Table 5.

**Table 5**

| | **Wt.%** |
|---|---|
| Coconut sugar | 63.6 |
| Brown cane sugar | 9.1 |
| Refined cane sugar | 17.4 |
| Coconut cream concentrate ¹ | 0.6 |
| Water | 9.3 |

| | |
|---|---|
| ¹ ex Thai Coconut Public Company Ltd. (28-30% fat, 60-65% water) | |

The coconut sugar alternative was prepared by introducing the ingredients into a 1 Liter oil heated jacketed glass reactor and heating the mixture under stirring for 120 minutes. After about 40 minutes the mixture reached a temperature of 100°C, after about 60 minutes a temperature of 110°C and after about 80 minutes a temperature of about 120°C which was remained stable for the rest of the heating period.

The coconut sugar alternative was used to prepare a sweet soy sauce on the basis of the recipes shown in Table 6.

**Table 6**

| | **Wt.%** |
|---|---|
| Fermented soy sauce | **19.1** |
| Coconut sugar alternative | **80.9** |

The sweet soy sauce was prepared by introducing the fermented soy sauce and the coconut sugar alternative into a 1 Liter oil heated jacketed glass reactor. The mixture was kept boiling until it reached 75° Brix. The hot mixture was filtered and cooled, followed by maturation at 60°C for 3 days. After maturation, the sediment and cream layer were removed.

The sweet soy sauce was evaluated by a sensory expert panel. It was found that the soy sauce was very similar to the sweet soy sauce of Example 2.

## Claims

1. A process for preparing a coconut sugar alternative, comprising the steps of:
a preparing a syrup mixture by combining:
i) 100 parts by weight of sugar component, including 10-100 parts by weight of sugar selected from cane sugar, beet sugar, palm sugar and combinations thereof and 0-90 parts by weight of coconut sugar;
ii) at least 0.2 parts by weight of coconut material selected from coconut cream, coconut milk and combinations thereof, and not more than 50 parts by weight of coconut material selected from coconut cream, coconut milk, coconut water, coconut meat and combinations thereof;
iii) 0-100 parts by weight of water; and
iv) 0-50 parts by weight of other edible ingredients;
b heating the syrup mixture for at least 5 minutes at a temperature of at least 110°C to obtain a heated sugar composition.

2. A process according to claim 1, wherein the sugar component contains 0-30 wt.% coconut sugar and 50-100 wt.% of sugar selected from cane sugar, beet sugar, palm sugar and combinations thereof.

3. Process according to claim 1, wherein the sugar component contains 30-90 wt.% coconut sugar and 10-70 wt.% of sugar selected from cane sugar, beet sugar, palm sugar and combinations thereof.

4. Process according to any one of the preceding claims, wherein the sugar component contains at least 80 wt.% of cane sugar, preferably refined cane sugar.

5. Process according to any one of the preceding claims, wherein the coconut material comprises by weight of dry matter:
- 2-20 wt.% protein;
- 2-20 wt.% sugar component;
- 50-90 wt.% fat.

6. Process according to any one of the preceding claims, wherein the coconut material comprises fat and protein in a weight ratio that is in the range of 20:1 to 5:1.

7. Process according to any one of the preceding claims, wherein 100 parts by weight of the sugar component are mixed with 0.5-40 parts by weight, more preferably 2-30 parts by weight and most preferably 4-20 parts by weight of the coconut material.

8. Process according to any one of the preceding claims, wherein the coconut material is coconut cream.

9. Process according to any one of the preceding claims, wherein the syrup mixture is heated at a temperature of 115-185°C for at least 5 minutes.

10. Process according to any one of the preceding claims, wherein the syrup is heated at atmospheric pressure or reduced pressure and water is allowed to evaporate during the heating, and the heated sugar composition that is obtained after the heating contains less than 5 wt.% water.

11. Process according to any one of the preceding claims, wherein the syrup mixture is heated at a pressure of at least 1.5 bar.

12. Coconut sugar alternative obtainable by the process according to anyone of claims 1-11.

13. A process of preparing a sweetened foodstuff or a sweetened beverage, said process comprising incorporating in a foodstuff or a beverage 1-90 wt.% of the coconut sugar alternative according to claim 12.

14. Process according to claim 13, wherein the process comprises combining 100 parts by weight of fermented soy sauce with 12-900 parts by weight of the coconut sugar alternative to produce a sweet soy sauce.

15. A sweetened foodstuff or a sweetened beverage obtainable by the process according to claim 13 or 14. wherein the sweetened foodstuff is preferably sweet soy sauce.

## Patentansprüche

1. Verfahren zur Herstellung einer Kokosnusszuckeralternative, umfassend die Schritte:
a Herstellen einer Sirupmischung durch Kombination von:
i) 100 Gewichtsteilen Zuckerkomponente, die 10-100 Gewichtsteile Zucker, ausgewählt unter Rohrzucker, Rübenzucker, Palmzucker und Kombinationen davon, und 0-90 Gewichtsteile Kokosnusszucker enthält;
ii) mindestens 0,2 Gewichtsteilen Kokosnussmaterial, ausgewählt unter Kokosnusscreme, Kokosnussmilch und Kombinationen davon, und nicht mehr als 50 Gewichtsteilen Kokosnussmaterial, ausgewählt unter Kokosnusscreme, Kokosnussmilch, Kokosnusswasser, Kokosnussfleisch und Kombinationen davon;
iii) 0-100 Gewichtsteilen Wasser; und
iv) 0-50 Gewichtsteilen anderer essbarer Zutaten;
b Erhitzen der Sirupmischung mindestens 5 Minuten lang bei einer Temperatur von mindestens 110°C, um eine erhitzte Zuckerzusammensetzung zu erhalten.

2. Verfahren nach Anspruch 1, wobei die Zuckerkomponente 0-30 Gew.-% Kokosnusszucker und 50-100 Gew.-% Zucker, ausgewählt unter Rohrzucker, Rübenzucker, Palmzucker und Kombinationen davon, enthält.

3. Verfahren nach Anspruch 1, wobei die Zuckerkomponente 30-90 Gew.-% Kokosnusszucker und 10-70 Gew.-% Zucker, ausgewählt unter Rohrzucker, Rübenzucker, Palmzucker und Kombinationen davon, enthält.

4. Verfahren nach irgendeinem der vorhergehenden Ansprüche, wobei die Zuckerkomponente mindestens 80 Gew.-% Rohrzucker, vorzugsweise raffinierten Rohrzucker, enthält.

5. Verfahren nach irgendeinem der vorhergehenden Ansprüche, wobei das Kokosnussmaterial, bezogen auf Trockensubstanz, umfasst:
- 2-20 Gew.-% Protein;
- 2-20 Gew.-% Zuckerkomponente;
- 50-90 Gew.-% Fett.

6. Verfahren nach irgendeinem der vorhergehenden Ansprüche, wobei das Kokosnussmaterial Fett und Protein in einem Gewichtsverhältnis umfasst, das in dem Bereich von 20:1 bis 5:1 liegt.

7. Verfahren nach irgendeinem der vorhergehenden Ansprüche, wobei 100 Gewichtsteile der Zuckerkomponente mit 0,5-40 Gewichtsteilen, bevorzugter 2-30 Gewichtsteilen und höchst bevorzugt 4-20 Gewichtsteilen des Kokosnussmaterials gemischt werden.

8. Verfahren nach irgendeinem der vorhergehenden Ansprüche, wobei das Kokosnussmaterial Kokosnusscreme ist.

9. Verfahren nach irgendeinem der vorhergehenden Ansprüche, wobei die Sirupmischung mindestens 5 Minuten lang auf eine Temperatur von 115-185°C erhitzt wird.

10. Verfahren nach irgendeinem der vorhergehenden Ansprüche, wobei der Sirup bei Atmosphärendruck oder vermindertem Druck erhitzt wird und man Wasser während des Erhitzens verdampfen lässt und die erhitzte Zuckerzusammensetzung, die nach dem Erhitzen erhalten wird, weniger als 5 Gew.-% Wasser enthält.

11. Verfahren nach irgendeinem der vorhergehenden Ansprüche, wobei die Sirupmischung bei einem Druck von mindestens 1,5 bar erhitzt wird.

12. Kokosnusszuckeralternative, erhältlich nach dem Verfahren nach mindestens einem der Ansprüche 1-11.

13. Verfahren zur Herstellung eines gesüßten Lebensmittels oder eines gesüßten Getränks, wobei das Verfahren das Einverleiben einer Kokosnusszuckeralternative nach Anspruch 12 in ein Lebensmittel oder ein Getränk umfasst.

14. Verfahren nach Anspruch 13, wobei das Verfahren das Kombinieren von 100 Gewichtsteilen fermentierter Sojasoße mit 12-900 Gewichtsteilen der Kokosnusszuckeralternative umfasst, um eine süße Sojasoße herzustellen.

15. Gesüßtes Lebensmittel oder gesüßtes Getränk, erhältlich durch das Verfahren nach Anspruch 13 oder 14, wobei das gesüßte Lebensmittel vorzugsweise süße Sojasoße ist.

## Revendications

1. Procédé de préparation d'une alternative de sucre de noix de coco, comprenant les étapes de :
a préparation d'un mélange de sirop par combinaison de :
i) 100 parties en masse de constituant de sucre, incluant 10-100 parties en masse de sucre choisi parmi le sucre de canne, le sucre de betterave, le sucre de palme et des combinaisons de ceux-ci et 0-90 parties en masse de sucre de noix de coco ;
ii) au moins 0,2 partie en masse de matériau de noix de coco choisi parmi la crème de noix de coco, le lait de noix de coco et des combinaisons de ceux-ci, et au plus 50 parties en masse de matériau de noix de coco choisi parmi la crème de noix de coco, le lait de noix de coco, l'eau de noix de coco, la pulpe de noix de coco et des combinaisons de ceux-ci ;
iii) 0-100 parties en masse d'eau ; et
iv) 0-50 parties en masse d'autres ingrédients comestibles ;
b chauffage du mélange de sirop pendant au moins 5 minutes à une température d'au moins 110°C pour obtenir une composition de sucre chauffée.

2. Procédé selon la revendication 1, dans lequel le constituant de sucre contient 0-30 % en masse de sucre de noix de coco et 50-100 % en masse de sucre choisi parmi le sucre de canne, le sucre de betterave, le sucre de palme et des combinaisons de ceux-ci.

3. Procédé selon la revendication 1, dans lequel le constituant de sucre contient 30-90 % en masse de sucre de noix de coco et 10-70 % en masse de sucre choisi parmi le sucre de canne, le sucre de betterave, le sucre de palme et des combinaisons de ceux-ci.

4. Procédé selon l'une quelconque des revendications précédentes, dans lequel le constituant de sucre contient au moins 80 % en masse de sucre de canne, de préférence de sucre de canne raffiné.

5. Procédé selon l'une quelconque des revendications précédentes, dans lequel le matériau de noix de coco comprend en masse de matière sèche :
- 2-20 % en masse de protéine ;
- 2-20 % en masse de constituant de sucre ;
- 50-90 % en masse de graisse.

6. Procédé selon l'une quelconque des revendications précédentes, dans lequel le matériau de noix de coco comprend des graisse et protéine dans un rapport massique qui se trouve dans l'intervalle de 20:1 à 5:1.

7. Procédé selon l'une quelconque des revendications précédentes, dans lequel 100 parties en masse du constituant de sucre sont mélangées avec 0,5-40 parties en masse, encore mieux 2-30 parties en masse et bien mieux encore 4-20 parties en masse du matériau de noix de coco.

8. Procédé selon l'une quelconque des revendications précédentes, dans lequel le matériau de noix de coco est la crème de noix de coco.

9. Procédé selon l'une quelconque des revendications précédentes, dans lequel le mélange de sirop est chauffé à une température de 115-185°C pendant au moins 5 minutes.

10. Procédé selon l'une quelconque des revendications précédentes, dans lequel le sirop est chauffé à pression atmosphérique ou pression réduite et l'eau est laissée à évaporer pendant le chauffage, et la composition de sucre chauffée qui est obtenue après le chauffage contient moins de 5 % en masse d'eau.

11. Procédé selon l'une quelconque des revendications précédentes, dans lequel le mélange de sirop est chauffé à une pression d'au moins 1,5 bar.

12. Alternative de sucre de noix de coco pouvant être obtenue par le procédé selon l'une quelconque des revendications 1-11.

13. Procédé de préparation d'un aliment édulcoré ou d'une boisson édulcorée, ledit procédé comprenant l'incorporation dans un aliment ou une boisson de 1-90 % en masse de l'alternative de sucre de noix de coco selon la revendication 12.

14. Procédé selon la revendication 13, dans lequel le procédé comprend la combinaison de 100 parties en masse de sauce de soja fermentée avec 12-900 parties en masse de l'alternative de sucre de noix de coco pour produire une sauce de soja sucrée.

15. Aliment édulcoré ou boisson édulcorée pouvant être obtenu par le procédé selon la revendication 13 ou 14, dans lequel l'aliment édulcoré est de préférence de la sauce de soja sucrée.
